Europäisches Patentamt

European Patent Office

Office européen des brevets

(19)

(11) Numéro de publication: **0 032 743**
**A1**

## DEMANDE DE BREVET EUROPEEN
(12)

(21) Numéro de dépôt: **81100343.3**

(22) Date de dépôt: **19.01.81**

(51) Int. Cl.³: **B 68 G 7/00, B 29 D 27/04**

(30) Priorité: **21.01.80 FR 8001252**

(43) Date de publication de la demande: **29.07.81** **Bulletin 81/30**

(84) Etats contractants désignés: **DE GB IT**

(71) Demandeur: **Sanson, Joseph, 86, avenue du Colonel Morlaix-Demozay, F-45190 Beaugency (FR)**

(72) Inventeur: **Sanson, Joseph, 86, avenue du Colonel Morlaix-Demozay, F-45190 Beaugency (FR)**

(74) Mandataire: **Casalonga, Axel et al, BUREAU D.A. CASALONGA OFFICE JOSSE & PETIT Lilienstrasse 77, D-8000 München 80 (DE)**

(54) Procédé de fabrication de sièges ou de coussins en mousse de matière plastique à housse intégrée et à ossature préfabriquée incorporée, et installation pour la mise en oeuvre de ce procédé.

(57) Fabrication de sièges ou coussins en mousse à housse intégrée et assoture préfabriquée incorporée, par introduction de mousse de matière plastique à l'intérieur d'une housse formée à partir de plusieurs parties soudées entre elles et comportant une poche intérieure soudée à la housse et recevant l'ossature.

On fixe la housse (6) à l'ossature (1), on fixe l'ossature (1) avec la housse dans une partie (20) d'un moule en plusieurs parties, on gonfle la housse en créant une différence de pression entre l'intérieur et l'extérieur de la housse, on maintient cette différence de pression constante pendant la fermeture du moule et on crée, lorsque le moule est fermé, une dépression à l'extérieur de la housse pour parfaire la mise en forme de cette dernière contre l'empreinte du moule avant d'introduire la mousse.

Application: notamment à la fabrication de sièges, par exemple pour automobiles.

Procédé de fabrication de sièges ou de coussins en mousse de
matière plastique à housse intégrée et à ossature préfabriquée
incorporée, et installation pour la mise en oeuvre de ce
procédé.

_____

La présente invention a pour objet un procédé de fabrication de sièges ou coussins en mousse de matière plastique à
housse intégrée et à ossature rigide préfabriquée incorporée,
ainsi qu'une installation pour la mise en oeuvre de ce procédé.

Par la demande de brevet français n° 76 11 950, on connaît un procédé de fabrication de tels sièges ou coussins.
Suivant ce procédé connu, on forme une housse étanche à partir
de plusieurs parties de film plastique et/ou de tissu rendu
étanche, par exemple par enduction sur une face, après avoir
ménagé une ouverture, de préférence une fente, dans l'une au
moins desdites parties et soudé un manchon de film plastique
extérieurement sur les bords de ladite ouverture, en soudant
lesdites parties entre elles le long de leurs bords. On retourne la housse à travers ladite ouverture et ledit manchon.
On soude l'extrémité libre dudit manchon et on repousse vers
l'intérieur de la housse la poche ainsi formée. On introduit
une ossature rigide préfabriquée dans ladite poche. On place
la housse avec l'ossature incorporée dans un moule en plusieurs parties. Après fermeture du moule, on applique la
housse contre l'empreinte du moule, par pression intérieure ou
dépression extérieure, on introduit de la mousse de matière
plastique dans le compartiment étanche formé entre la housse
et ladite poche et on laisse polymériser ladite mousse dans le
moule fermé avant de démouler le siège ou coussin.

Suivant ce procédé de fabrication connu, on soude un profilé de raccordement de forme spéciale entre les différentes
parties de la housse. Ce profilé de raccordement remplit plusieurs fonctions parmi lesquelles on peut citer la possibilité
de souder deux parties de housse de natures différentes, qui
ne sont pas soudables directement l'une à l'autre. Cependant,
suivant la demande de brevet précitée, le jonc de raccordement
est pourvu de deux rangées de perforations permettant de le maintenir en place au cours des opérations de soudage et en particulier de l'utiliser pour le positionnement de la housse sur le moule pendant la mise en forme de cette dernière et son remplissage par la mousse de matière plastique.

Il s'avère cependant que l'opération de montage de la housse, à l'aide d'un ou de plusieurs joncs de ce type, sur le moule, implique une main-d'oeuvre non négligeable et immobilise le moule pendant le temps nécessaire à ce montage, ce qui réduit sensiblement la cadence de production des coussins ou sièges.

Cette façon d'opérer est intéressante dans le cas où, comme cela est prévu par la demande de brevet n° 76 11950, l'ossature servant à renforcer le siège ou coussin est fabriquée in situ, par exemple par injection d'une résine de type polyester dans un compartiment supplémentaire prévu à l'intérieur de la housse placée dans le moule, et renfermant le cas échéant une ou plusieurs couches de tissu de verre. En effet, ce n'est qu'à l'aide de ces joncs de raccordement qu'il est possible de maintenir une telle housse lâche dans le moule.

La présente invention a par contre pour objet un procédé de fabrication de sièges ou de coussins en mousse de matière plastique à housse intégrée, renforcés par une ossature rigide incorporée qui est non pas fabriquée in situ, c'est-à-dire à l'intérieur de la housse maintenue dans le moule, mais est préfabriquée et incorporée à la housse préalablement à la mise en place de cette dernière dans le moule.

Suivant le procédé conforme à l'invention, on forme à l'envers une housse étanche à partir de plusieurs parties de film plastique et/ou de tissu rendu étanches, après avoir ménagé une ouverture dans l'une au moins desdites parties de la housse et soudé un manchon de film plastique extérieurement sur les bords de ladite ouverture, en soudant lesdites parties entre elles le long de leurs bords. On retourne la housse à travers ladite ouverture et ledit manchon. On soude l'extrémité libre dudit manchon pour donner à ce dernier la forme d'une poche. On repousse à l'intérieur de la housse la poche ainsi formée. On introduit une ossature rigide préfabriquée dans ladite poche. On fixe la housse en plusieurs endroits à ladite ossature. On fixe ladite ossature, avec la housse, à une partie d'un moule en plusieurs parties. On établit une différence de pression entre le compartiment intérieur étanche délimité par ladite housse et ladite poche intérieure, et l'extérieur de la housse, pour provoquer un léger gonflement de la housse. On ferme le moule en maintenant constante ladite différence de pression pendant la fermeture du moule. Lorsque le moule est fermé, on établit une différence de pression accrue entre ledit compartiment intérieur de la housse et l'extérieur de la housse, pour parfaire la mise en forme de la housse sur l'empreinte du moule. On introduit ensuite une mousse de matière plastique dans ledit compartiment intérieur de la housse. On fait polymériser ladite mousse et on ouvre le moule pour démouler le siège ou coussin à housse intégrée et à ossature incorporée.

Suivant le procédé conforme à l'invention, la housse est donc maintenue en position dans le moule, non pas par les joncs de raccordement prévus sur la housse suivant la demande de brevet français n° 76 11950, mais par l'ossature rigide sur laquelle est la housse fixée préalablement à l'introduction da la housse avec l'ossature dans le moule. Cela permet un positionnement très précis, dans le moule, de l'ossature et également de la housse elle-même fixée à cette ossature. En effet, par le gonflement de la housse préalablement à la fermeture du moule, grâce à l'établissement d'une différence de pression entre le compartiment intérieur de la housse et l'extérieur de la housse, et par le maintien constant de cette différence de pression pendant la fermeture du moule, la housse adopte une forme très proche de sa forme définitive. En particulier, les soudures entre les différentes parties de la housse, soudures qui n'ont qu'une très faible possibilité d'allongement, adoptent, sous l'effet de ce gonflement, déjà avant la fermeture complète du moule, leur forme définitive, et viennent se placer exactement aux lignes de jonction du moule fermé. De même, les surfaces de la housse entre lesdites soudures adoptent, déjà avant la fermeture complète du moule, des dimensions très proches de leurs dimensions définitives et

　　　　　　　　　　　0032743

viennent, lors de la fermeture complète du moule, s'appliquer sans formation de plis sur l'empreinte du moule. L'établissement, après fermeture du moule, d'une différence de pression accrue entre l'intérieur et l'extérieur de la housse, est destinée à parfaire la mise en forme de ces surfaces de la housse sur l'empreinte du moule.

La fixation de la housse sur l'ossature rigide peut être assurée par tout dispositif approprié. On peut utiliser de préférence des parties de l'ossature présentant une forme se prêtant particulièrement bien à un maintien simple de la housse. Au cas où de telles parties n'existent pas sur l'ossature, il y a lieu de les prévoir au moment de la fabrication de ladite ossature. Dans le cas d'ossatures rigides en matière plastique ou métalliques, on peut, par exemple, prévoir des noix présentant un trou taraudé ou non, insérées dans la matière plastique lors du moulage de l'ossature en matière plastique ou fixées par soudage sur l'ossature métallique lors de la fabrication de cette dernière. En général, il est cependant suffisant d'utiliser les orifices prévus normalement sur une ossature rigide de siège pour véhicule automobile, en vue de la fixation du siège sur le véhicule, ou pour le montage d'accessoires tel qu'un appuie-tête dans le cas d'un dossier de siège.

Un problème particulier qui se pose au sujet de la préparation de la housse concerne les soudures entre les différentes parties de la housse, soudures qui, dans le cadre de l'invention, peuvent être réalisées directement entre deux parties de la housse ou par l'intermédiaire d'un jonc de raccordement qui permet de relier par soudage deux parties de housse qui ne sont pas directement soudables l'une à l'autre et procure également au siège ou coussin terminé un aspect plus plaisant.

En effet, sous l'action de la différence de pression entre l'intérieur et l'extérieur de la housse, avant et pendant la fermeture du moule, la housse se gonfle. Les parois de la housse étant constituées par des films de matière plastique ou des tissus élastiques, les surfaces de ces parois s'agrandissent. Si l'on ne tient pas compte de ce phénomène lors de la préparation de la housse, des plis se forment sur les faces de l'article fabriqué, la superficie des différentes parties de la housse gonflée étant plus grande que la superficie des parties de l'empreinte du moule sur lesquelles ces parties de la housse doivent être mises en forme.

Il faut donc diminuer en conséquence les surfaces des parties de tissus ou de films de matière plastique élastiques utilisées pour la confection de la housse.

D'un autre côté, comme déjà mentionné, les soudures entre les différentes parties de la housse ne présentent qu'une très faible possibilité d'allongement.

Pour tenir compte de ces deux phénomènes, il est donc nécessaire à la fois de diminuer les surfaces des différentes parties de la housse et de conserver aux soudures un périmètre sensiblement égal au périmètre des lignes de jonction du moule, lignes sur lesquelles doivent venir se placer les soudures de la housse. Pour cela, on utilise, suivant l'invention, pour souder entre elles les parties de la housse, des électrodes de soudage dont le périmètre est sensiblement égal au périmètre de la ligne de jonction du moule à l'endroit où doit venir se placer la soudure correspondante et on monte sur ces électrodes, en les étirant, des parties de housse ayant, à l'état détendu, des surfaces plus petites que les surfaces correspondantes de l'empreinte du moule.

Compte tenu du fait que la soudure elle-même peut s'allonger de quelques pourcents, il convient de tenir compte également de cette faible possibilité d'allongement, lors de la confection de la housse, en utilisant, pour la réalisation des soudures, des électrodes dont le périmètre est légèrement inférieur à celui de la ligne de jonction du moule à l'endroit de laquelle doit venir se placer la soudure correspondante.

Pour monter les parties de la housse à l'état étiré sur les électrodes de soudage, il est avantageux de munir les différentes parties de la housse d'une rangée de trous sur leur périphérie et d'engager ces trous sur une rangée de pointes prévues sur l'une des deux électrodes destinée à réaliser la soudure entre deux desdites parties de la housse, à l'extérieur desdites électrodes. Pour faciliter la mise en place des parties de housse à souder sur ces pointes, il est avantageux, au lieu de monter lesdites pointes en position fixe sur le pourtour de l'électrode à l'extérieur de cette dernière, et de fixer les parties de housse à l'état étiré sur ces pointes de monter lesdites pointes coulissantes sur des tiges de guidage dont les axes se coupent au centre de l'électrode, les pointes étant sollicitées vers le centre de l'électrode par des ressorts. On peut alors monter les parties de housse à l'état détendu sur lesdites pointes et on écarte ensuite vers l'extérieur les pointes en étirant les parties de housse, par exemple par gonflement d'un tuyau intercalé entre l'électrode et lesdites pointes.

La différence de pression entre l'intérieur de la housse et l'extérieur, avant et pendant la fermeture du moule, peut être établie soit par création d'une surpression à l'intérieur de la housse, soit par création d'une dépression à l'extérieur de la housse.

Pour maintenir constante la différence de pression pendant la fermeture du moule, il est possible dans le premier cas, de remplir la housse, avant fermeture du moule, à travers l'orifice d'introduction de mousse par un gaz sous une pression prédéterminée et de laisser s'échapper le gaz contenu à l'intérieur de la housse, pendant la fermeture du moule, lorsque la housse gonflée se trouve comprimée entre les parties de moule par un clapet limiteur de pression à grand débit placé sur l'orifice de remplissage de la housse et réglé sur la pression de remplissage de cette dernière.

Dans le second cas, on laisse communiquer avec l'air ambiant l'orifice de remplissage de la housse montée dans le moule on enferme le moule, avant fermeture de ce dernier, dans une enceinte étanche, on crée une dépression dans cette enceinte et on ferme ensuite le moule, en maintenant cette dépression extérieure de sorte que l'intérieur de la housse se trouve toujours sous la pression de l'air ambiant.

En se référant au dessin annexé, on va décrire ci-après plusieurs modes de réalisation illustratifs et non limitatifs d'un coussin ou siège conforme à l'invention et de l'installation pour la fabrication d'un tel coussin ou siège; sur ce dessin :

la fig. 1 est une coupe d'un dossier de siège, avant remplissage de la housse à l'aide de mousse, suivant I-I de la fig. 2, montrant le positionnement de la housse du dossier dans une partie de moule, par l'intermédiaire de l'ossature incorporée;

la fig. 2 est une coupe de ce même dossier de siège, suivant II-II de la fig. 1, sans le moule;

la fig. 3 représente un dispositif pour le soudage de la housse du siège des fig. 1 et 2;

la fig. 4 représente, à plus grande échelle, un dispositif pour le positionnement des parties de housse à souder et d'un jonc de raccordement sur une électrode de soudage;

la fig. 5 représente un mode de réalisation d'un dispositif d'étirement et de positionnement des parties de housse sur une électrode de soudage;

la fig. 6 est une coupe verticale d'un mode de réalisation d'une installation de mise en forme de la housse du dossier de siège des fig. 1 et 2 et de remplissage de ladite housse par une mousse de matière plastique;

la fig. 7 est une coupe verticale d'une variante de l'installation de la fig. 6;

la fig. 8 représente une autre variante de l'installation de la fig. 6;

la fig. 9 est une vue en plan d'une installation suivant la fig. 7 ou 8.

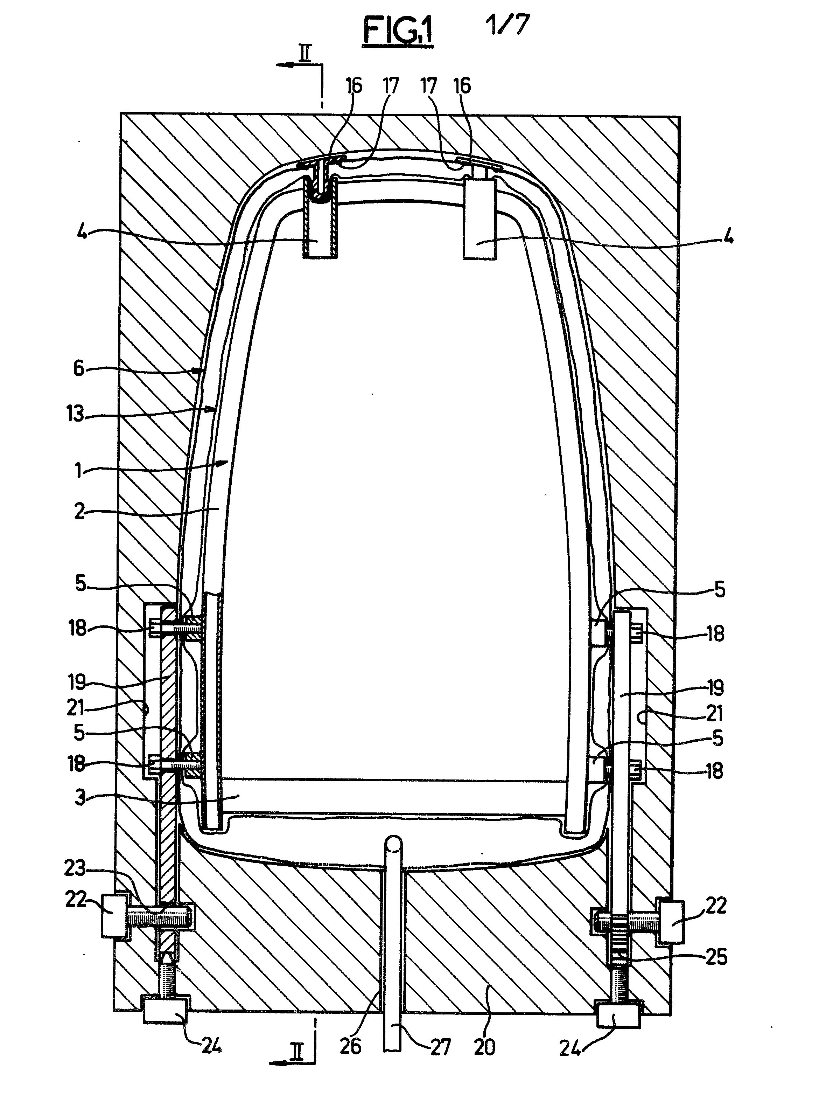

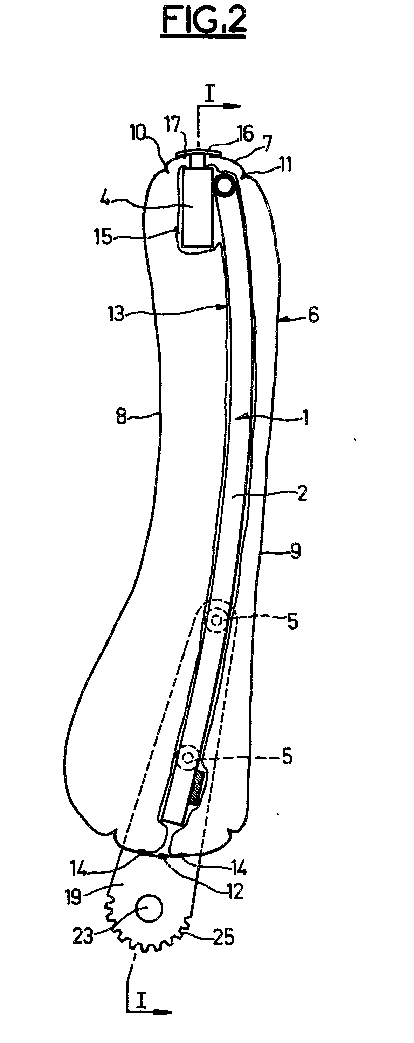

Les fig. 1 et 2 représentent un dossier de siège de véhicule automobile, en mousse de matière plastique, à housse intégrée et à ossature rigide préfabriquée incorporée. Sur ces figures, la mousse n'a pas encore étant introduite à l'intérieur de la housse qui présente cependant déjà sa forme définitive.

L'ossature 1 comprend un tube 2 sensiblement en U et une barre transversale de renforcement 3 reliant entre elle les deux extrémités libres inférieures du tube 2. Deux tronçons de tube 4 sont fixés à la partie transversale supérieure du tube 2 pour servir, de façon connue, à l'adaptation d'un appui-tête sur le dossier de siège.

Par ailleurs, deux noix taraudées 5 sont fixées extérieurement sur chacune des deux branches du tube 2 en U.

La housse 6 qui entoure complétement l'ossature 1 est composés d'un bandeau périphérique 7 faisant tout le tour du dossier, sur la tranche de ce dernier, et de deux flans 8 et 9 dont l'un constitue la face avant et l'autre la face arrière du dossier. Le bandeau 7 et les flans 8 et 9 peuvent être constitués par des films de matière plastique et/ou par des tissus rendus étanches par exemple par application d'une couche d'enduction sur la face tournée vers l'intérieur du siège. Ces films ou tissus sont réalisés à partir de matières thermoplastiques se prêtant au soudage, par exemple par haute-fréquence ou un autre procédé adapté à la nature des matériaux utilisés pour la housse. Les flans 8 et 9 sont reliés au bandeau 7 par des soudures périphériques 10, 11 effectuées de manière que les bords soudés des flans 8, 9 et du bandeau 7 soient tournés vers l'intérieur de la housse sur le dossier terminé.

Le bandeau 7 comporte, à sa partie inférieure, une fente pratiquée sensiblement dans le plan de l'ossature 1 et présentant une longueur légèrement supérieure à la largeur de l'ossature 1. Une fermeture à glissière 12 est soudée en 14 sur les deux bords de cette fente.

Une poche 13 en feuille de matière plastique est disposée à l'intérieur de la housse 6 de manière à entourer complétement l'ossature 1. Cette poche 13 est réalisée à partir d'un manchon dont une extrémité est fixée par les soudures 14 sur les deux bords de la fente du bandeau 7, sur le côté tourné vers l'intérieur du dossier. L'autre extrémité de ce manchon est fermée par une soudure 15.

L'ossature 1 est introduite par la fente à fermeture à glissière 12 du bandeau 7 dans la poche 13 contenue à l'intérieur de la housse 6 et ladite fente est ensuite fermée à l'aide de la fermeture à glissière 12.

La housse 6 est fixée sur l'ossature 1 par deux bouchons 16 en matière plastique dont chacun est soudé en 17 autour d'un orifice pratiqué dans le bandeau 7, chaque bouchon 16 étant enfoncé, avec la poche 13, dans l'un des deux tronçons de tube 4 fixés à l'ossature 1. Par ailleurs, dans la partie inférieure du dossier, la housse 6 est fixée de chaque côté à l'ossature 1 par deux vis 18 qui traversent deux trous d'une ferrure d'articulation 19 servant au montage du dossier terminé sur son support d'utilisation c'est-à-dire sur le véhicule, et au réglage d'inclinaison du dossier. Les deux vis 18 sont engagées dans les deux noix taraudées 5 de l'ossature 1 à travers le bandeau 7 et la poche 13 de manière que le bandeau 7 et la poche 13 se trouvent serrés de façon étanche entre la ferrure 19 et les noix 5.

La housse 6 fixée ainsi à l'ossature 1 incorporée est alors prête à être montée dans un moule pour la mise en forme de la housse 6 et pour l'introduction de la mousse de matière plastique à l'intérieur de la housse 6. Ce moule ouvrant est formé de plusieurs parties, à savoir, dans l'exemple représenté, de trois parties assurant la mise en forme respectivement du bandeau 7 et des deux flans 8 et 9, les soudures 10 et 11 venant se situer à l'endroit des lignes de jonction des parties de moule.

Sur la fig. 1, on a représenté la partie centrale de moule 20 destinée à la mise en forme du bandeau 7. La housse 6 avec l'ossature 1 incorporée est montée sur la partie de moule 20 à l'aide des deux ferrures d'articulation 19. La partie de moule 20 présente deux logements 21 dont la forme est adaptée à celle des ferrures 19. Une vis 22 est enfoncée de l'extérieur à travers l'orifice 23 prévu dans la ferrure 19 pour le passage de l'axe d'articulation du dossier sur le véhicule, tandis qu'un cliquet 24 coopère avec les dents du secteur denté 25 de la ferrure 19 pour bloquer cette dernière ainsi que l'ossature 1 dans la position désirée par rapport à la partie de moule 20.

On reconnaît en outre sur la fig. 1 que la partie de moule 20 présente, sensiblement à l'endroit de la fente avec fermeture à glissière 12 du bandeau 17, un trou de passage 26 destiné à recevoir un manchon 27 en matière plastique soudé à la poche 13 à l'intérieur de la housse 6, autour d'un orifice pratiqué dans la poche 13 au voisinage de la fermeture à glissière 12. Ce manchon 27 est destiné à l'introduction de la mousse de matière plastique à l'intérieur de la housse 6 ainsi qu'à permettre la mise sous pression ou la pénétration de l'air ambiant à l'intérieur de la housse 6 au cours de la mise en forme, comme décrit ci-après.

Pour assurer que les deux soudures 10 et 11 viennent coincider avec les lignes de jonction des parties de moule et que la housse 6 ne forme pas de plis lors de sa mise en forme dans le moule, il y a lieu de prendre des dispositions particulières lors de la confection de la housse. Pour éviter la formation de plis, il est nécessaire de gonfler la housse avant la fermeture du moule, ce qui fait que les surfaces des flans 8 et 9 et du bandeau 7 constitués par des matières élastiques s'agrandissent. Par contre, à l'endroit des soudures 10 et 11, la housse 6 est pratiquement bloquée, ces soudures n'ayant qu'une très faible possibilité d'allongement, généralement inférieure à 2%. Il est donc nécessaire, lors de la confection de la housse, de réaliser les soudures 10 et 11 sur des flans 8 et 9 et un bandeau 7 étirés, c'est-à-dire agrandis, tout en réalisant les soudures 10 et 11 de manière qu'elles présentent un périmètre égal ou légèrement inférieur à celui des lignes de jonction du moule avec lesquelles lesdites soudures doivent coïncider.

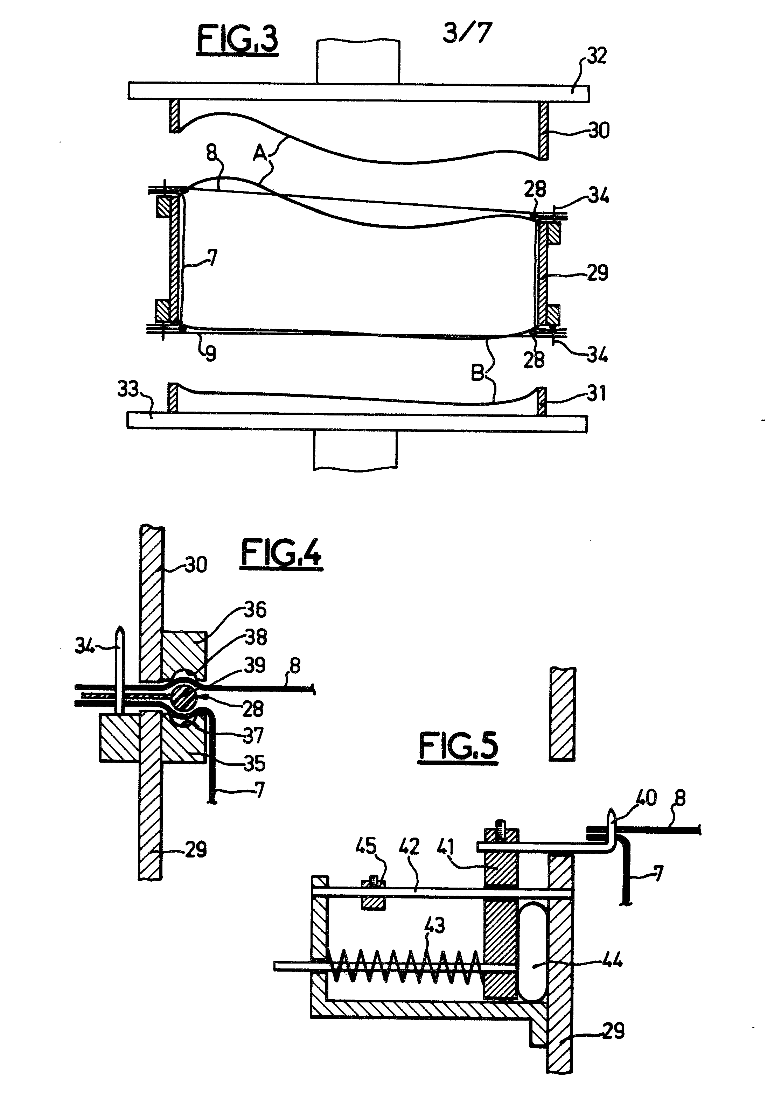

Les fig. 3, 4 et 5 illustrent un dispositif permettant de confectionner la housse en tenant compte de ces deux particularités.

La fig. 3 représente un ensemble de soudage pour le soudage simultané des deux flans 8 et 9 sur le bandeau 7 qui a été muni au préalable d'une fente sur les bords de laquelle sont soudés le manchon formant la poche 13 et la fermeture à glissière 12. Dans l'exemple représenté, on intercale, entre chaque flan 8, 9 et le bandeau 7, un jonc de raccordement 28 qui a pour fonction de permettre le soudage de deux matériaux qui ne sont pas directement soudables l'un à l'autre.

Le dispositif selon la fig. 3 comprend une double électrode centrale 29, une électrode supérieure 30 et une électrode inférieure 31. Les électrodes 30 et 31 sont chacune montée sur un plateau 32, 33 mobile verticalement de manière que l'électrode supérieure 30 puisse être abaissée contre la partie supérieure de l'électrode centrale 29 et que l'électrode inférieure 31 puisse être soulevée contre la partie inférieur de l'électrode centrale 29. L'électrode supérieure 30 et la partie supérieure de l'électrode centrale 29 présentent un profil périphérique A dont le tracé correspond au tracé de la ligne de jonction entre les parties de moule servant à la mise en forme du flan 8 et du bandeau 7. De la même manière, l'électrode inférieure 31 et la partie inférieure de l'électrode centrale 29 présentent un profil périphérique B dont le tracé correspond au tracé de la ligne de jonction des parties de moule servant à la mise en forme du flan 9 et du bandeau 7.

L'électrode centrale 29 porte, en face de chacune des électrodes 30 et 31, sur toute la périphérie, une rangée extérieure de pointes 34 équidistantes, par exemple en métal non ferreux ou en matière plastique. Les pointes 34 tournées vers l'électrode supérieure 30 sont dirigées vers le haut et les pointes 34 tournées vers l'électrode inférieure 31 sont dirigées vers le bas.

Le bandeau 7 est muni sur chacun de ses deux bords d'une rangée de trous équidistants et chacun des deux flans 8 et 9 est muni, sur son bord, d'une rangée correspondante de trous. Les trous sont pratiqués dans le bandeau 7 et dans les flans 8 et 9 en tenant compte de l'étirement que doivent subir les parties 7, 8 et 9 lors de la réalisation des soudures. On monte alors le bandeau 7 et les flans 8 et 9, en les étirant, sur les pointes 34 de l'électrode centrale 29, de manière que les faces du bandeau 7 et des flans 8 et 9 exposées vers l'extérieur sur le dossier terminé soient tournées vers l'intérieur. On procède ensuite au soudage, par abaissement de l'électrode supérieure 30 et montée de l'électrode inférieure 31, pour obtenir une housse qui, après retournement, incorporation d'une ossature et gonflement dans le moule, se trouve positionnée dans le moule de manière que les soudures coïncident avec les lignes de jonction des parties de moule. Le jonc de raccordement 28, dans le cas où un tel jonc est prévu, comporte également une rangée de trous pour pouvoir être monté sur les pointes 34 de l'électrode centrale 29, entre le bandeau 7 et le flan 8 et 9 respectivement.

La fig. 4 représente, à plus grande échelle, une coupe fractionnaire d'une variante de l'électrode centrale 29 et de l'électrode supérieure 30, permettant un positionnement plus précis d'un jonc de raccordement 28 lors du soudage du flan 8 au bandeau 7. L'électrode 29 comporte de nouveau une rangée extérieure de pointes équidistantes 31 sur lesquelles sont montés le bandeau 7, le jonc 29 et le flan 8, tous pourvus d'une rangée de trous équidistants. Pour assurer un maintien précis du jonc 29 qui, pendant le soudage, subirait un serrage s'il n'était maintenu que par les pointes 31, l'électrode centrale 29 et l'électrode supérieure 30 comportent chacune une bande périphérique intérieure 35, 36. La bande 35 de l'électrode 29 présente une rainure périphérique supérieure 37 et la bande 36 de l'électrode 30 présente une rainure périphérique inférieure 38. Ces deux rainures 37, 38 sont destinées à maintenir, pendant le soudage, un bourrelet périphérique intérieur 39 du jonc 28, à travers les épaisseurs du bandeau 7 et du flan 8. Après retournement de la housse à la suite de la confection de cette dernière, ce bourrelet 39 se trouve situé sur l'extérieur de la housse, à l'endroit des soudures, et procure au dossier terminé un aspect plus plaisant.

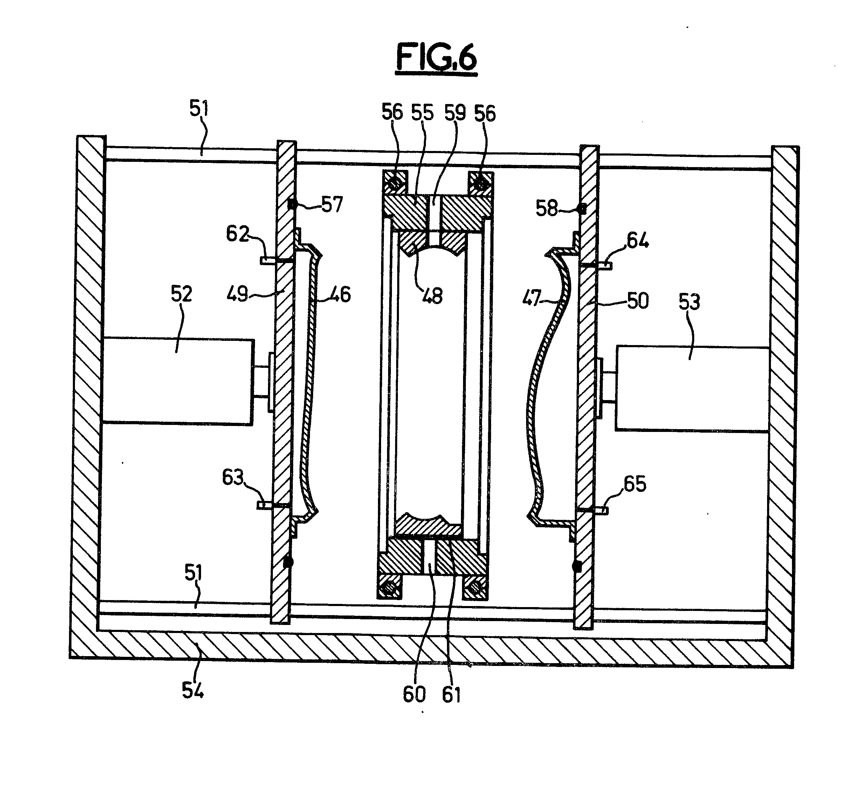

La fig. 5 représente, à plus grande échelle, une coupe fractionnaire d'un autre mode de réalisation d'un dispositif pour le positionnement des parties de housse à l'état étiré sur les électrodes de soudage. Comme pour la fig. 4, ce dispositif n'est représenté ici que pour la partie supérieure de l'électrode centrale 29, mais un dispositif correspondant est prévu sur la partie inférieure de l'électrode 29.

Au lieu de comporter des pointes de positionnement fixes comme sur les fig. 3 et 4, l'électrode centrale 29 est ici équipée d'une rangée de pointes 40 mobiles. Chaque pointe 40 est fixée de façon réglable, à l'extérieur de l'électrode 29, sur un coulisseau 41 lui-même monté coulissant sur une tige de guidage 42 fixée à l'électrode 29 de manière que son axe passe sensiblement par le centre de l'électrode 29. Le coulisseau 41 est sollicité en direction de l'électrode 29 par un ressort de compression 43 et un tuyau gonflable 44 s'étendant sur tout le pourtour extérieur de l'électrode 29, entre cette dernière et les coulisseaux 41 portant les différentes pointes 40 permet, lorsqu'il est gonflé, de repousser les aiguilles 40 vers l'extérieur jusqu'au contact d'une butée réglable 45 montée sur chaque tige de guidage 42.

Ce dispositif permet de monter le bandeau 7 et le flan 8 à l'état détendu sur les aiguilles 40 et par gonflement du tuyau 44, toutes les aiguilles 40 sont déplacées vers l'extérieur jusqu'au contact des butées 45, ce qui assure l'étirement du bandeau 7 et du flan 8 et la soudure consécutive du flan 8 et du bandeau 7 étirés.

La housse 6 étant ainsi confectionnée à l'envers, on retourne la housse à travers la fente et le manchon du bandeau 7. On soude en 15 l'extrémité libre du manchon pour former la poche 13 et on repousse cette poche 13 à l'intérieur de la housse 6. On engage l'ossature 1 à l'intérieur de la poche 13 et on fixe la housse 6 sur l'ossature 1 à l'aide des deux bouchons 17 et à l'aide des deux ferrures d'articulation 19. La housse avec ossature incorporée est alors prête à être montée dans le moule, de la manière esquissée sur la fig. 1.

Dans l'exemple décrit ci-dessus, la housse est formée de trois parties (bandeau périphérique 7 et deux flans 8 et 9) reliées entre elles par deux soudures périphériques 10 et 11. Par conséquent, le moule destiné à la mise en forme de la housse doit être composé de trois parties, à savoir d'une partie centrale pour la mise en forme du bandeau 7 et deux parties latérales pour la mise en forme des deux flans 8 et 9.

La fig. 6 représente une installation pour la mise en forme d'une telle housse et le remplissage de la housse par de la mousse de matière plastique.

Cette installation comprend deux parties latérales de moule 46 et 47 et une partie centrale de moule 48. Les deux parties latérales de moule 46 et 47 sont montées sur deux plateaux 49, 50 déplaçables parallèlement en translation sur des glissières 51 sous l'action de vérins 52, 53 fixés, tout comme les glissières 51, à un bâti fixe 54.

La partie centrale de moule 48 est montée sur un cadre central 55 déplaçable en translation sur des glissières 56 perpendiculaires aux glissières 51.

Chacun des plateaux 49, 50 comporte, autour de sa partie de moule 46, 47 un joint d'étanchéité périphérique 57, 58 qui, lorsque les plateaux 49, 50 sont rapprochés du cadre central 55 en vue de l'application des parties latérales de moule 46 et 47 contre la partie centrale de moule 48, vient porter de façon étanche contre le cadre 55 entourant la partie centrale de moule 48.

Le cadre central 55 ainsi que la partie centrale de moule 48 sont traversés par un trou 59 qui correspond au trou 26 de la partie de moule 20 de la fig. 1 et sert au passage du manchon de remplissage de mousse de la housse avec ossature incorporée dont la fixation à la partie centrale de moule 48 s'effectue par exemple de la manière représentée sur la fig. 1. Par ailleurs, le cadre central 55 présente un trou 60 communiquant par un canal 61 avec l'espace délimité par les plateaux 49 et 50 et le cadre central 55 lorsque lesdits plateaux sont appliqués contre ledit cadre.

Enfin, les deux plateaux 49, 50 comportent chacun des tubulures de raccordement respectivement 62, 63 et 64, 65 pour le passage d'un fluide de chauffage dans les parties latérales de moule 46 et 47.

La mise en forme et le remplissage d'un housse avec de la mousse de matière plastique sur l'installation telle que décrite s'effectuent de la manière suivante :

Le moule étant ouvert, c'est-à-dire les plateaux 49 et 50 étant écartés du cadre central 55, on monte la housse confectionnée de la manière décrite précédemment sur la partie centrale de moule 48 à l'aide de l'ossature incorporée à laquelle est

15 0032743

fixée la housse. On fait passer vers l'extérieur, à travers le trou 59, le manchon de remplissage de la housse. On gonfle la housse en la remplissant, par ledit manchon, à l'aide d'un gaz sous faible pression. Le système d'alimentation en gaz comprend un manodétendeur permettant de choisir la pression interne de la housse. Dès que le moule commence à se fermer, sous l'effet des vérin 52 et 53, une électrovanne prévue sur le système d'alimentation arrête l'arrivée du gaz dans la housse. Le système d'alimentation en gaz comporte par ailleurs un clapet limiteur de pression à grand débit qui, dès que la housse commence à être comprimée par les parties latérales de moule 46 et 47, assure, par échappement de gaz, le maintien d'une pression constante à l'intérieur de la housse.

Lorsque le moule est complétement fermé, les plateaux 49 et 50 étant appliqués de façon étanche contre le cadre central 55, de manière à délimiter une enceinte étanche contenant la housse, on applique une dépression à cette enceinte, par le trou 60 et le canal 61, dépression qui parfait la mise en forme de la housse sur l'empreinte du moule. On débranche alors le système d'alimentation en gaz sous pression du manchon de remplissage de la housse et on branche sur ce manchon un système d'alimentation en mousse de matière plastique. La housse étant maintenue par dépression contre l'empreinte du moule, la pression de gaz à l'intérieur de la housse n'est plus nécessaire pour maintenir en forme la housse. On injecte alors la mousse de matière plastique dans la housse et on laisse polymériser la mousse, éventuellement sous l'effet de la chaleur des parties latérales de moule 46, 47, avant d'ouvrir le moule et de démouler l'article terminé.

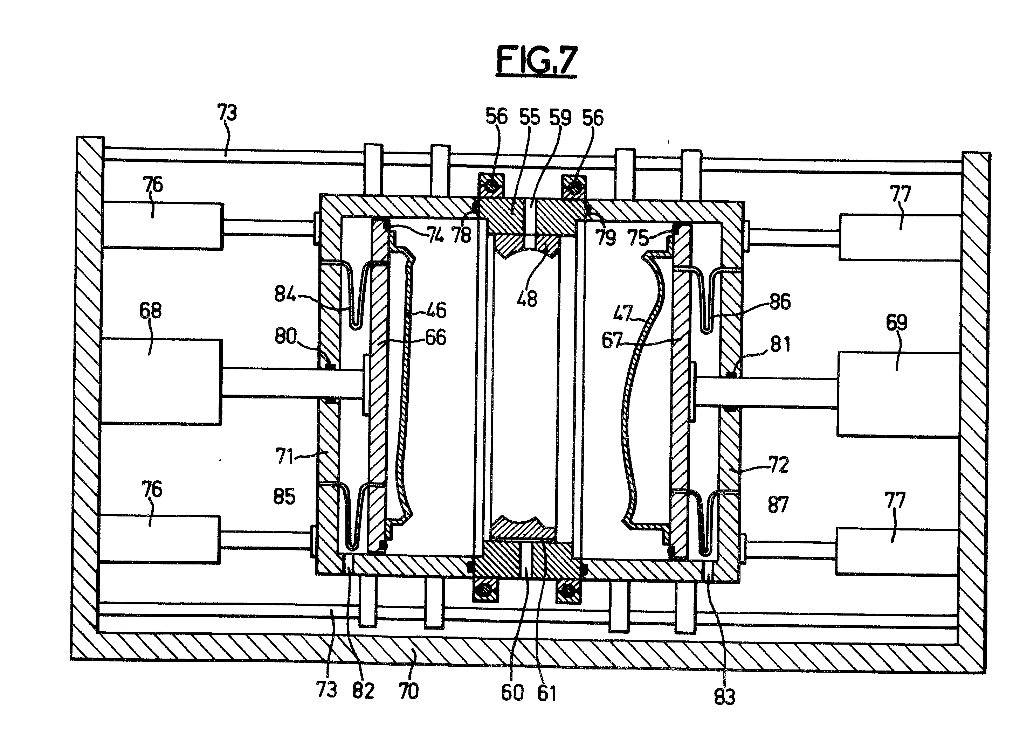

La fig. 7 représente un autre mode de réalisation d'une installation pour la mise en forme d'une housse et son remplissage à l'aide de mousse de matière plastique.

On retrouve sur cette installation la partie centrale de moule 48 et le cadre central 55 monté sur des glissières 56, et les parties latérales de moule 46 et 47. Les parties latérales de moule 46 et 47 sont fixées sur deux plateaux 66 et 67 mobiles en translation parallèle, sous l'action de vérins à double effet 68, 69 fixés à un bâti 70. Chaque plateau 66, 67
est monté coulissant à l'intérieur d'un caisson 71, 72 respectivement, les deux caissons 71, 72 étant mobiles en translation parallèle sur des glissières 73 fixées au bâti 70. Chaque
plateau 66, 67 comporte, à l'extérieur de sa partie latérale
de moule 46, 47, un joint d'étanchéité périphérique 74, 75,
respectivement, destiné, lorsque le moule est fermé, à venir
s'appliquer de façon étanche contre le cadre central 55.

Les deux caissons 71, 72 actionnés par des vérins à·
double effet 76, 77 prenant appui sur le bâti 70 portent, à
leur extrémité ouverte tournée vers le cadre central 55, un
joint d'étanchéité périphérique 78, 79 respectivement destiné,
lorsque les caissons 71 et 72 sont appliqués contre le cadre
central 55, à assurer l'étanchéité de l'enceinte délimitée par
les caissons 71, 72 et le cadre 55.

On retrouve, comme dans le mode de réalisation de la fig.
6, un orifice 59 traversant le cadre central 55 et la partie
centrale de moule 48, ainsi qu'un orifice 60 dans le cadre
central 55 et un conduit 61 entre le cadre 55 et la partie
centrale de moule 48.

Les tiges de piston des vérins 68, 69 traversent les
côtés fermés des caissons 71, 72, un joint d'étanchéité 80,
81, respectivement, assurant l'étanchéité entre les tiges de
piston et les caissons.

Chaque caisson 71, 72 comporte, par ailleurs, un trou de
passage 82, 83 respectivement, et des conduites souples 84, 85
et 86, 87 respectivement, traversent les côtés fermés des
caissons 71, 72 et les plateaux 66, 67 pour déboucher derrière
les parties latérales de moule 46, 47, en vue du chauffage de
ces dernières.

Pour mettre en forme et remplir de mousse de matière
plastique une housse à ossature incorporée sur cette installation, on monte la housse, par son ossature, de la manière
déjà décrite, sur la partie centrale de moule 48, l'installation étant ouverte, c'est-à-dire les caissons 71, 72 et les
plateaux 66, 67 portant les parties latérales de moule 46, 47
étant écartés du cadre central 55. Le manchon de remplissage

0032743

de la housse traverse de nouveau l'ouverture 59 de la partie centrale de moule 48 et du cadre central 55.

On déplace ensuite les deux caissons 71, 72 contre le cadre central 55 pour arriver à la position représentée sur la fig. 7. L'enceinte délimitée par les deux caissons 71, 72 et le cadre central 55 étant ainsi fermée de façon étanche, on applique une légère dépression dans cette enceinte, par les deux trous 82, 83 des caissons 71, 72. Sous l'effet de cette dépression, la housse dont le manchon de remplissage traversant l'ouverture 59 communique avec l'air ambiant se gonfle. On ferme ensuite le moule, c'est-à-dire qu'on rapproche les deux plateaux 66, 67 portant les parties latérales de moule 46, 47 du cadre central 55 jusqu'à ce que les plateaux 66, 67 s'appliquent de façon étanche, grâce aux joints 74, 75, contre le cadre 55. Pendant cette fermeture du moule, l'air contenu à l'intérieur de la housse peut s'échapper librement par le manchon traversant l'ouverture 59 au fur et à mesure que la housse se trouve comprimée, tandis que la dépression établie à l'intérieur de l'enceinte délimitée par les caissons 71, 72 et le cadre 55 continue d'agir sur la housse grâce au jeu existant entre les plateaux 66, 67 et les caissons 71, 72.

Lorsque le moule est fermé, les plateaux 66, 67 portant de façon étanche contre le cadre central 55, on applique, par le trou 60 et le conduit 61, une dépression plus forte dans l'enceinte de volume réduit délimitée par les plateaux 66, 67 et le cadre central 55, pour parfaire la mise en forme de la housse sur l'empreinte du moule. On introduit ensuite la mousse de matière plastique à l'intérieur de la housse par le manchon traversant le trou 59 et on fait polymériser cette mousse, le cas échéant sous l'effet du chauffage des parties latérales de moule 46, 47.

Dans ce mode de réalisation de l'installation, le gonflement de la housse préalablement à la fermeture du moule et la mise en forme définitive de la housse sur l'empreinte du moule s'effectuent donc uniquement par dépression. La mise en dépression en deux étapes, à savoir d'abord par une dépression réduite dans le volume délimité par les caissons 71, 72 et le

0032743

cadre 55 et ensuite par une dépression plus forte dans le
volume réduit délimité par les plateaux 66, 67 et le cadre 55
présente l'avantage de réduire considérablement la consommation d'énergie.

Au lieu de commander les déplacements des caissons 71, 72
et des plateaux 66, 67 directement à l'aide de vérins à double
effet, il est également possible, comme représenté sur la fig.
8, de prévoir, pour commander le déplacement de chaque caisson
71, 72, une genouillère 88, 89 entre chaque caisson 71, 72 et
le bâti 70, chaque genouillère étant manoeuvrée par un vérin à
double effet 90, 91 monté sur le bâti 70.

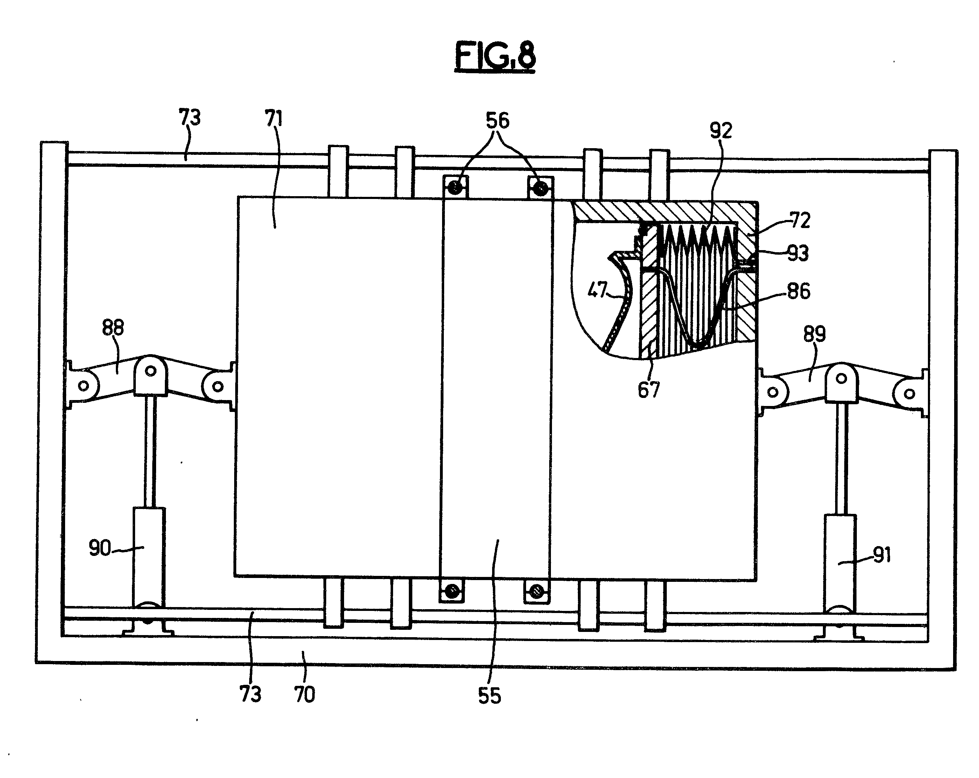

Sur la fig. 8, on reconnaît également que les deux plateaux portant les parties latérales de moule, dont seul le
plateau 67 portant la partie latérale de moule 47 est visible,
peuvent être commandés chacun par un soufflet pneumatique 92
placé entre le côté fermé ou fond du caisson 72 et le plateau
67. La commande du soufflet 92 s'effectue par un orifice 93
prévu dans le fond du caisson 72 et la conduite souple 86 pour
le chauffage de la partie de moule 47 traverse le soufflet 92.

Le mode de fonctionnement de l'installation selon la fig.
8 est par ailleurs identique à celui de l'installation de la
fig. 7.

Le montage du cadre central 55 sur des glissières 56
perpendiculaires aux glissières 51 (fig. 6) ou 73 (fig. 7 et
8) servant au guidage des plateaux 49, 50 (fig. 6) ou des
caissons 71, 72 (fig. 7 et 8) présentent l'avantage qu'il est
possible de dégager latéralement le cadre 55 avec la partie
centrale de moule 48, ce qui simplifie le montage de la housse
avec son ossature incorporée sur la partie centrale de moule
48. Ce dégagement latéral du cadre central 55 peut être commandé par un vérin à double effet non représenté.

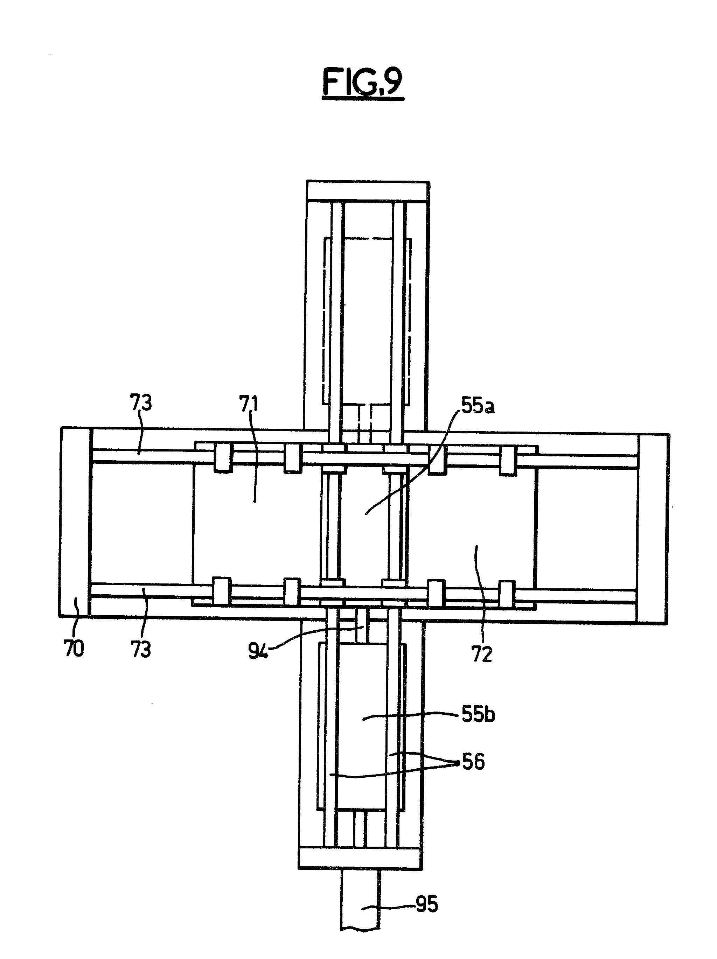

La fig. 9 représente une solution particulièrement avantageuse du montage du cadre central portant la partie central
de moule, permettant d'augmenter la cadence de production de
l'installation. On retrouve sur la vue en plan de la fig. 9 le
bâti 70 portant les glissières 73 pour les caissons 71, 72.
Les glissières 56 perpendiculaires aux glissières 73 sont prolongées symétriquement de part et d'autre du bâti 70 et deux cadres centraux 55a, 55b équipés chacun d'une partie centrale de moule et rendus solidaires l'un de l'autre par une pièce d'accouplement 94 sont montés coulissants sur les glissières 56. Un vérin à double effet 95 permet ainsi d'amener successivement l'un ou l'autre des deux cadres centraux 55a, 55b entre les caissons 71, 72. Il est donc possible d'associer une partie centrale de moule 55a aux deux parties latérales de moule pour fabriquer un dossier et, en même temps, de préparer l'autre partie centrale de moule 55b dégagée latéralement, c'est-à-dire d'y monter une housse avec ossature incorporée. A la fin de la polymérisation de la mousse dans le dossier en cours de fabrication, on ouvre le moule et les caissons 71, 72 et on déplace les deux cadres centraux 55a et 55b à l'aide du vérin 95 pour dégager latéralement le cadre 55a, avec le dossier terminé, à la position indiquée en tirets et amener le cadre 55b, garni d'une nouvelle housse avec ossature incorporée, en position de moulage. On peut alors démouler le dossier terminé du cadre 55a et équiper ce dernier d'une nouvelle housse avec ossature incorporée pendant la fabrication du dossier dans le cadre 55b en position de moulage.

Dans tous les modes de réalisation représentés et décrits de l'installation de moulage conforme à l'invention, l'étanchéité de l'enceinte dans laquelle est établie la dépression en vue de la mise en forme définitive de la housse sur l'empreinte du moule est réalisée entre le cadre central 55 et les plateaux 49, 50 ou 66, 67 plutôt que directement entre les parties de moule. En effet, la précision nécessaire à l'établissement et au maintien de la dépression dans cette enceinte est ainsi assurée une fois pour toutes sur la machine elle-même, ce qui simplifie la construction des moules qui peuvent être réalisés avec une précision moindre.

Il est avantageux de monter les glissières 56 pour le ou les cadres centraux 55 ou 55a, 55b sur un bâti lui-même monté coulissant sur les glissières 51 ou 73 des plateaux 49, 50 ou des caissons 71,72.

0032743

Il convient de remarquer que les modes de réalisation décrits ci-dessus et représentés n'ont été donnés qu'à titre d'exemples illustratifs et non limitatifs et que de nombreuses modifications et variantes sont possibles dans le cadre de la présente invention.

Ainsi, la housse des coussins ou sièges, au lieu de se composer de trois parties (bandeau périphérique 7 et deux flans 8, 9) reliées entre elles par deux soudures (10, 11), ce qui implique un moule en trois parties, pourraient également être composées d'un nombre différent de parties impliquant une division différente du moule. La division du moule en fonction du nombre et de la position des soudures sur la housse s'effectue de la manière décrite dans la demande de brevet français n° 76 11950.

La fixation de la housse sur l'ossature incorporée et le montage de l'ossature avec la housse sur le moule pourraient également se faire d'une manière différente de celle décrite au sujet des fig. 1 et 2. Ainsi, par exemple, dans le cas d'une ossature prolongée vers l'extérieur de la housse, en vue du montage direct du dossier par l'ossature sur le véhicule, il serait possible de supprimer les noix taraudées 5 et de maintenir la housse sur l'ossature uniquement par les bouchons 16 enfoncés dans les tronçons de tube 4 servant au montage d'un appui-tête. Les parties de l'ossature sortant de la housse pourraient alors être utilisées directement pour le montage de l'ossature avec la housse sur le moule.

Enfin, à l'endroit du passage, à travers le bandeau 7 de la housse 6 et à travers la poche 13, des vis 18 engagées dans les noix taraudées 5 de l'ossature 1, il est possible, soit d'enfoncer les vis 18 simplement à travers le bandeau 7 et la poche 13 et de serrer le bandeau 7 et la poche 13 entre la ferrure d'articulation 19 et les noix 5, soit de pratiquer au préalable un orifice de passage pour les vis 18 dans le bandeau 7 et la poche 13 et de souder la poche 13 au bandeau 7 sur le pourtour de cet orifice. De façon analogue, à l'endroit des bouchons 16, il est possible, soit d'enfoncer le bouchon 16 soudé au bandeau 7, avec la poche 13, dans le tronçon de tube 4, soit de souder la poche 13 au bandeau 7 autour d'un orifice pratiqué au préalable dans la poche 13.

REVENDICATIONS

1. Procédé de fabrication de sièges ou de coussins en mousse de matière plastique à housse intégrée et à ossature rigide préfabriquée, incorporée, consistant à former à l'envers une housse étanche à partir de plusieurs parties de film plastique et/ou de tissu rendu étanche, après avoir ménagé une ouverture dans l'une au moins desdites parties et soudé un manchon de film plastique par une extrémité, extérieurement, sur les bords de ladite ouverture, en soudant lesdites parties entre elles le long de leurs bords, à retourner la housse à travers ladite ouverture et ledit manchon, à souder l'extrémité libre dudit manchon et à repousser vers l'intérieur de la housse la poche ainsi fermée, à introduire une ossature rigide préfabriquée dans ladite poche, à l'intérieur de la housse, à placer la housse avec l'ossature incorporée dans un moule en plusieurs parties, à fermer le moule, à appliquer la housse contre l'empreinte du moule, par pression intérieure ou dépression extérieure, à introduire de la mousse de matière plastique dans le compartiment étanche formé entre la housse et ladite poche et à laisser polymériser ladite mousse dans le moule fermé avant de démouler le siège ou coussin, caractérisé par le fait qu'après avoir introduit ladite ossature dans ladite poche, on fixe la housse en plusieurs endroits à ladite ossature, on fixe ladite ossature, avec ladite housse, à une partie d'un moule en plusieurs parties, on établit une différence de pression entre le compartiment intérieur étanche de la housse délimité par ladite housse et ladite poche intérieure, et l'extérieur de la housse, pour provoquer un léger gonflement de la housse, on ferme le moule en maintenant constante ladite différence de pression pendant la fermeture du moule et on établit, lorsque le moule est fermé, une différence de pression accrue entre ledit compartiment intérieur de la housse et l'extérieur de la housse, pour parfaire la mise en forme de la housse sur l'empreinte du moule.

2. Procédé suivant la revendication 1, caractérisé par le fait qu'on fixe la housse sur l'ossature à l'aide des dispositifs prévus pour le montage du coussin ou siège terminé sur son support d'utilisation et/ou les dispositifs prévus pour le montage d'accessoires sur le coussin ou siège, tel qu'un appui-tête dans le cas d'un dossier de siège.

3. Procédé suivant la revendication 1 ou 2, caractérisé par le fait que pour la fixation de l'ossature avec la housse sur une partie de moule, on utilise les dispositifs prévus pour le montage du coussin ou siège terminé sur son support d'utilisation.

4. Procédé suivant l'une quelconque des revendications 1 à 3, caractérisé par le fait qu'on établit avant fermeture du moule et qu'on maintient pendant la fermeture du moule, entre le compartiment intérieur et l'extérieur de la housse, une différence de pression inférieure à 1 bar et de préférence comprise entre 50 et 250 millibars.

5. Procédé suivant la revendication 4, caractérisé par le fait qu'on établit une surpression à l'intérieur de la housse.

6. Procédé suivant la revendication 4, caractérisé par le fait qu'on établit une dépression à l'extérieur de la housse.

7. Procédé suivant la revendication 1, caractérisé par le fait qu'on utilise, pour la fabrication de la housse, des parties de film plastique et/ou de tissu ayant, à l'état détendu, une superficie inférieure à celle des parties de l'empreinte du moule sur lesquelles elles doivent être mises en forme, qu'on monte chaque fois deux desdites parties devant être soudées entre elles, à l'état étiré, sur une électrode de soudage et qu'on réalise la soudure entre lesdites deux parties de manière que cette soudure ait une longueur égale ou très légèrement inférieure à celle de la ligne de jonction du moule avec laquelle ladite soudure doit coïncider sur le moule fermé.

8. Installation pour la mise en oeuvre du procédé suivant l'une quelconque des revendications 1 à 6, comprenant un dispositif de moulage avec un moule en plusieurs parties, des moyens pour ouvrir et fermer ledit moule, des moyens pour mettre en forme la housse sur l'empreinte du moule, et des moyens pour introduire de la mousse de matière plastique à l'intérieur de la housse, caractérisée par le fait qu'elle

24    0032743

comprend : deux plateaux (49, 50 ou 66, 67) portant chacun une partie de moule (46, 47) et déplaçables en translation parallèle l'une contre l'autre une partie du moule comportant des moyens pour la fixation de l'ossature incorporée à la housse, lesdits plateaux comportant un joint d'étanchéité pour délimiter, lorsque le moule est fermé, une enceinte étanche contenant le moule, des moyens pour établir avant fermeture du moule et pour maintenir constante pendant la fermeture du moule une différence de pression entre l'intérieur et l'extérieur de la housse; et des moyens pour établir, après fermeture du moule, une dépression dans ladite enceinte.

9. Installation suivant la revendication 8, caractérisée par le fait qu'elle comprend : deux plateaux (66, 67) portant chacun une partie latérale de moule (46, 47) et montés chacun à l'intérieur d'un caisson (71, 72) ouvert en direction de l'autre caisson, lesdits deux caissons étant mobiles en translation parallèle et portant à leur extrémité ouverte un joint d'étanchéité (78, 79) pour délimiter, lorsque les caissons sont fermés, une enceinte étanche entourant le moule ouvert; et des moyens pour établir une dépression dans ladite enceinte entourant le moule ouvert.

10. Installation suivant la revendication 8 ou 9, comprenant un moule en trois parties pour la réalisation d'un coussin ou siège avec une housse formée de trois parties réunies par deux soudures, caractérisée par le fait qu'elle comprend une partie centrale de moule (48) pourvue de moyens pour la fixation d'une ossature incorporée à une housse et montée sur un cadre central (55), et que lesdits plateaux (49, 50 ou 66, 67) coopèrent avec ledit cadre central pour délimiter ladite enceinte entourant le moule fermé.

11. Installation suivant les revendications 9 et 10, caractérisée par le fait que lesdits caissons (71, 72) coopèrent avec ledit cadre central (55) pour délimiter ladite enceinte entourant le moule ouvert.

12. Installation suivant la revendication 10 ou 11, caractérisée par le fait que lesdits plateaux (49,50) ou lesdits caissons (71, 72) sont montés coulissants sur des glissières parallèles (73) et que ledit cadre central (55) est monté coulissant sur des glissières (56) perpendiculaires auxdites glissières des plateaux ou des caissons.

13. Installation suivant l'une quelconque des revendications 8 à 12, caractérisée par le fait qu'elle comprend des organes de manoeuvre tels que des vérins, des soufflets et/ou des genouillères commandées par des vérins pour déplacer lesdits plateaux, lesdits caissons et ledit cadre central.

14. Installation suivant les revendications 12 et 13, caractérisée par le fait qu'elle comprend deux cadre centraux (55a,55b) portant chacun une partie centrale de moule (48) et solidaires l'un de l'autre, et un vérin à double effet (95) pour amener alternativement l'un ou l'autre desdits deux cadres centraux entre les deux plateaux portant les parties latérales de moule.

15. Installation pour la mise en oeuvre du procédé suivant la revendication 7, comprenant un dispositif de soudage avec au moins deux électrodes de soudage, pour réaliser une soudure entre chaque fois deux parties de housse à assembler, caractérisée par le fait que l'une desdites deux électrodes porte une rangée extérieure de pointes permettant de positionner les parties de housse à assembler, à l'état étiré, entre les deux électrodes de soudage.

16. Installation suivant la revendication 15, pour le soudage de deux parties de housse avec un jonc de raccordement intermédiaire à bourrelet périphérique caractérisée par le fait que lesdites deux électrodes (29, 30) portent chacune intérieurement une bande périphérique (35, 36), les deux bandes présentant, sur leurs faces tournées l'une vers l'autre, une rainure (37, 38) d'un profil accordé au profil d'un bourrelet périphérique (39) du jonc de raccordement (28) pour maintenir ce jonc entre les deux parties de housse à assembler, pendant l'opération de soudage.

17. Installation suivant la revendication 15, caractérisée par le fait qu'elle comprend des pointes (40) montées coulissantes sur des tiges de guidage (42) dont les axes se croisent sensiblement au centre de l'électrode, des ressorts (43) pour solliciter lesdites pointes en permanence vers l'intérieur de l'électrode, et un moyen tel qu'un tuyau gonflable pour repousser lesdites pointes vers l'extérieur en vue d'étirer les parties de housse pour le soudage.

0032743

FIG.1    1/7

0032743

# FIG.2

FIG.3

32
30
8
A
28
34
7
29
9
34
28
B
33
31

FIG.4

30
36
34
38
39
8
28
37
35
7
29

FIG.5

40
8
45
42
41
7
43
44
29

## FIG.6

# FIG.7

0032743

# FIG.8

# FIG.9

## DOCUMENTS CONSIDERES COMME PERTINENTS

| Catégorie | Citation du document avec indication, en cas de besoin, des parties pertinentes | Revendication concernée |
|---|---|---|
| | FR - A - 2 308 586 (GRIFFINE-MARECHAL)<br><br>* en entier * | 1,3,4,<br>6,8,<br>15,17 |
| | -- | |
| | US - A - 3 258 511 (McGREGOR)<br><br>* en entier * | 1,4,<br>6,8 |
| | -- | |
| D | FR - A - 2 348 887 (AU NOM DU REQUERANT)<br><br>* en entier * | 1,4,6,<br>8 |
| | -- | |
| A | FR - A - 2 327 053 (UPJOHN)<br><br>* en entier * | 1,7 |
| | ------------------- | |

**CLASSEMENT DE LA DEMANDE (Int. Cl.³)**

B 68 G 7/00
B 29 D 27/04

**DOMAINES TECHNIQUES RECHERCHES (Int. Cl.³)**

B 68 G
B 29 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche La Haye | Date d'achèvement de la recherche 13-04-1981 | Examinateur MARTIN |
|---|---|---|

OEB Form 1503.1 06.78